# EUROPEAN PATENT APPLICATION

(11) **EP 3 032 777 A1**
(43) Date of publication of application: **15.06.2016**
(21) Application number: 14197026.9
(22) Date of filing: 09.12.2014
(51) Int. Cl.: H04L 12/12, G06F 1/32, H04L 12/24

(54) **Reliability management of green transmission interfaces**

(71) Applicant: Alcatel-Lucent Deutschland AG, 70435 Stuttgart (DE)
(72) Inventor: Schlenk, Ralph, 70435 Stuttgart (DE)
(74) Representative: MERH-IP Matias Erny Reichl Hoffmann Patentanwälte PartG mbB

(57) **Abstract**

A method (300) for controlling a network component (101, 210, 212) of a communication network (100) is described. The method (300) comprises determining (302) historical data which is indicative of environmental conditions and/or operation conditions that the network component (101, 210, 212) has been exposed to in the past. Furthermore, the method (300) comprises determining (304) whether to put the network component (101, 210, 212) into a power-save mode based on the historical data.

## Description

### Field of the invention

The present document relates to telecommunication networks. In particular, the present document relates to a method and a corresponding network node for the provision of cost efficient telecommunication networks.

### Background of the Invention

Software Defined Networking (SDN) refers to a telecommunication network architecture where control plane functionalities are separated from the data plane and thus can be independently developed in software. This open architecture helps to speed up the provision of new services to networking.

In particular, SDN techniques can help to lower the energy consumption of telecommunication networks. Telecommunication networks are typically designed for peak loads and exhibit only relatively low power proportionality. By activating and de-activating network capacity resources based on momentary traffic demands, the network may be operated in a "load-adaptive" manner and energy consumption can be reduced significantly.

However, switching on/off network resources or network components (such as ports, transponders, controllers, line cards, etc.) according to daily and weekly traffic patterns (e.g. according to a "follow the moon" strategy) introduces temperature variations on network components, as a temperature of a network component is typically higher in on-state than in off-state. Notably when using highly integrated technology, as is the case for optical transmitters and receivers, wireless transponders/amplifiers etc., a negative impact on the component lifetime may be expected. This is because temperature changes may cause different expansion of the different materials within a component. These expansions may cause relatively high stress and fatigue to solder joints of a component of a network node.

### Summary of the Invention

The present document addresses the technical problem of providing energy efficient telecommunication networks with adaptive network capacity resources without (substantially) reducing the lifetime of network components. Furthermore, the present document is directed at providing a trade-off between energy cost savings from power-down strategies of an adaptive telecommunication network and possible additional costs from a reduced lifetime of network components.

According to an aspect, a method for controlling a network component of a telecommunication network is described. The method comprises determining historical data which is indicative of environmental conditions and/or operation conditions that the network component has been exposed to in the past. Furthermore, the method comprises determining whether to put the network component into a power-save mode based on the historical data.

According to a further aspect, an interface card for a network node of a communication network is described. The interface card comprises a storage unit configured to store historical data which is indicative of environmental conditions and/or operation conditions that the interface card and/or a network module of the interface card has been exposed to in the past. Furthermore, the interface card comprises a processing unit configured to determine whether to put the interface card and/or the network module into a power-save mode based on the historical data.

According to a further aspect, a communication network is described. The communication network comprises a plurality of network components which are coupled by a transmission medium. Furthermore, the communication network comprises a control plane (or a control server) which is configured to control the plurality of network components using a method described in the present document.

According to a further aspect, a software program is described. The software program may be adapted for execution on a processor and for performing the method steps outlined in the present document when carried out on the processor.

According to another aspect, a storage medium is described. The storage medium may comprise a software program adapted for execution on a processor and for performing the method steps outlined in the present document when carried out on the processor.

According to a further aspect, a computer program product is described. The computer program may comprise executable instructions for performing the method steps outlined in the present document when executed on a computer.

It should be noted that the methods and systems including its preferred embodiments as outlined in the present patent application may be used stand-alone or in combination with the other methods and systems disclosed in this document. Furthermore, all aspects of the methods and systems outlined in the present patent application may be arbitrarily combined. In particular, the features of the claims may be combined with one another in an arbitrary manner.

### Brief Description of the drawings

The invention is explained below in an exemplary manner with reference to the accompanying drawings, wherein
Fig. 1 shows a block diagram of an example telecommunication network;
Fig. 2 shows a block diagram of an example network node;
Fig. 3 shows a flow chart of an example method for controlling an interface card of a network node; and
Fig. 4 shows a flow chart of an example method for updating a lifetime management algorithm for an interface card of a network node.

### Detailed Description of Embodiments of the Invention

As outlined above, the present document is directed at the technical problem of providing an energy efficient telecommunication network with minimal impact on the lifetime of network components. In the present document, the term network component may refer to a network node, to an interface card of a network node and/or to a network module (e.g. a transmitter/receiver module) of an interface card.

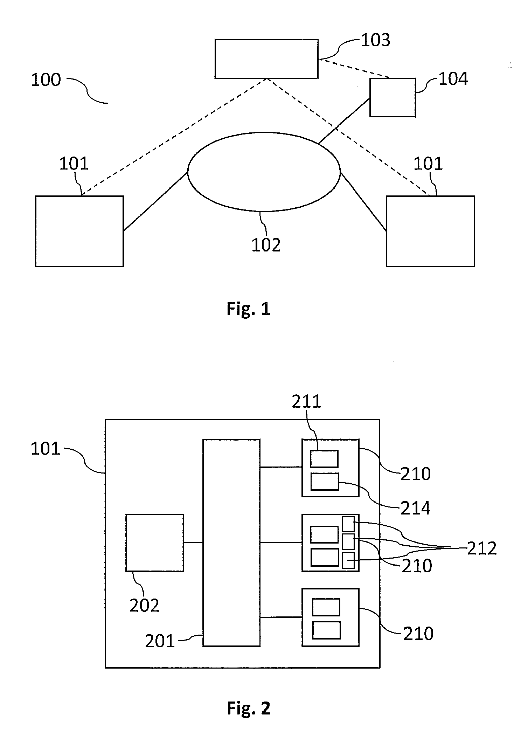

Fig. 1 shows a block diagram of an example network 100. The network 100 comprises a plurality of network nodes 101 which are coupled with one another via a transmission medium 102 (e.g. via one or more optical fibers and/or via radio transmission). A network node 101 may comprise a transmitter for sending data over the transmission medium 102 and/or a receiver for receiving data from the transmission medium 102. Furthermore, the network 100 may comprise a control plane 103 (e.g. a server) which may be configured to control the operation of the one or more network nodes 101. By way of example, the control plane 103 may be configured to activate/de-activate one or more interface cards of a network node 101. The control plane 103 may communicate with the individual network nodes 101 using control signals, which are represented in Fig. 1 as dashed lines. In addition, the network 100 may comprise a central storage entity 104 which is configured to store data. The central storage entity 104 may be configured to store the historical data described in the present document. The one or more network nodes 101 and the control plane 103 may be configured to store data on and/or retrieve data from the storage entity 104.

Fig. 2 shows a block diagram of an example network node 101. The network node 101 may comprise one or more interface cards 210 which a configured to provide network capacity. By activating an interface card 210, the capacity of the network 100 may be increased and by de-activating the interface card 210, the capacity of the network 100 may be decreased. Hence, by varying the number of active interface cards 210, the capacity, notably the transmission capacity, of the network 100 may be adapted to momentary capacity requirements. Furthermore, the energy consumption of the network nodes 101 may be adapted accordingly.

The network node 101 may further comprise a node processing unit 201 and a communication unit 202 for communicating with the control plane 103. An interface card 210 may comprise a card processing unit 211 and a card storage unit 214. An interface card 210 may comprise one or more network modules 212, e.g. one or more optical transmitter/receiver modules or one or more optical transponders.

The network 100 (e.g. the control plane 103, the one or more network nodes 101 and/or an interface card 210 of a network node 101) may be configured to collect, aggregate and permanently store relevant environmental parameters (in particular with regards to the time instants when switching on/off an interface card 210 due to power-save) that characterize the reliability of a network component (e.g. of an interface card 210 or of a network module 212 of the interface card 210). The logging mechanism may be implemented locally within a network component (e.g. on the card storage unit 214). As such, the logging mechanism may be implemented in a simple and cost-efficient manner. Furthermore, a local logging mechanism may ensure that physical storage is inseparably connected with a respective network component.

A lifetime management algorithm which may be executed within a network component may be configured to determine an actual relative reduction in reliability based on the stored environmental parameters (which may also be referred to as historical data). Software updates for the network component may allow for fine tuning of such a lifetime management algorithm, e.g. by choosing different parameters. In particular, such a software update may account for new insights from field returns or from new measurements of component reliability.

The lifetime management algorithm may be configured to manage a reliability / power-save trade-off for a network component. Depending on specific parameters like the planned operating time of a network component, current environmental conditions of the network component, dynamic energy price, replacement costs etc., the lifetime management algorithm may calculate the effects of a power-save switch off on the remaining lifetime of the network component. According to a pre-determined power management policy, the lifetime management algorithm may allow or deny a request for entering a power-save mode.

In particular, the lifetime management algorithm may be configured to determine an estimate of the reduction of the lifetime of a network component due to the additional stress which is caused by entering a power-save mode. This estimate of the reduction of the lifetime of the network component may be associated with a corresponding lifetime reduction cost. The lifetime reduction cost may be compared with an energy saving that is associated with the power-save mode. By comparing the lifetime reduction cost with the energy saving, a decision may be made whether to allow or to deny the request for entering the power-save mode.

As illustrated in Fig. 2, network nodes 101 comprise one or more interface cards 210. In particular, network nodes 101 of an optical network may comprise highspeed optical interface cards 210 which comprise circuits that are made of different materials such as Si, GaAs, InP that are mounted on ceramic or plastic substrates and housed in different packages and soldered with leaded or lead-free tin. If these different materials are connected to one another, changing environmental conditions and/or operation conditions may introduce mechanical stress that can result in fatigue. This problem typically becomes worse with smaller packages and finer pitch sizes.

An interface card 210 may be configured to record environmental parameters (i.e. historic data) which are indicative of the environmental conditions that the interface card 210 has been submitted to in the past. Each element of an interface card 210 may experience different environmental conditions. The history of the environmental conditions of an interface card 210 has an impact on the "to-be-expected" lifetime of the interface card 210. Hence, even if an interface card 210 is moved to a different shelf or location (i.e. to a different network node 101), this history of environmental conditions should be maintained. This may be ensured by providing a card storage unit 214 (e.g. a flash RAM based EEPROM device) which is configured to store environmental parameters (i.e. historic data) that are indicative of the history of environmental conditions. In order to maintain the amount of stored data at a relatively low level, the environmental parameters may be aggregated and/or priority may be given to recent environmental parameters. The environmental parameters which have been found to be most relevant for contributing to failures such as thermal/mechanical stress, over-voltage, etc. are the temperature of or at an interface card 210 and the voltage at an interface card 210 and/or the temperature / voltage at a network module 212 of an interface card 210.

In particular, an interface card 210 may be configured to store one or more of the following environmental parameters:
- the number of power-save events that the interface card 210 (or a network module 212 of the interface card 210) has been submitted to;
- the temperature during a power-save event. In particular, the ambient temperature, a base temperature of the interface card 210 (or a network module 212 of the interface card 210), a delta of the temperature of the interface card 210 (or a network module 212 of the interface card 210), and/or a ramp up/down time of the temperature of the interface card 210 (or a network module 212 of the interface card 210) may be stored;

- the average temperature (e.g. in 250-hour intervals) of the interface card 210 (or a network module 212 of the interface card 210); the interval for determining the average temperature may be varied, in order to ensure that the temperature is not measured repeatedly at the same time of a day;
- a number and dwell time of abnormal temperature events (e.g. an event when the temperature exceeds a pre-determined temperature threshold); and/or
- a number of over-voltage events.

Temperature logs may be effectively reduced in size by logarithmically scaled binning and (in-case of frequent power-save events) cycle-counting techniques like the ordered overall range method or the rain-flow counting method. Using such methods, the environmental parameters may be stored in a cost efficient EEPROM (having a size of e.g. 64kB).

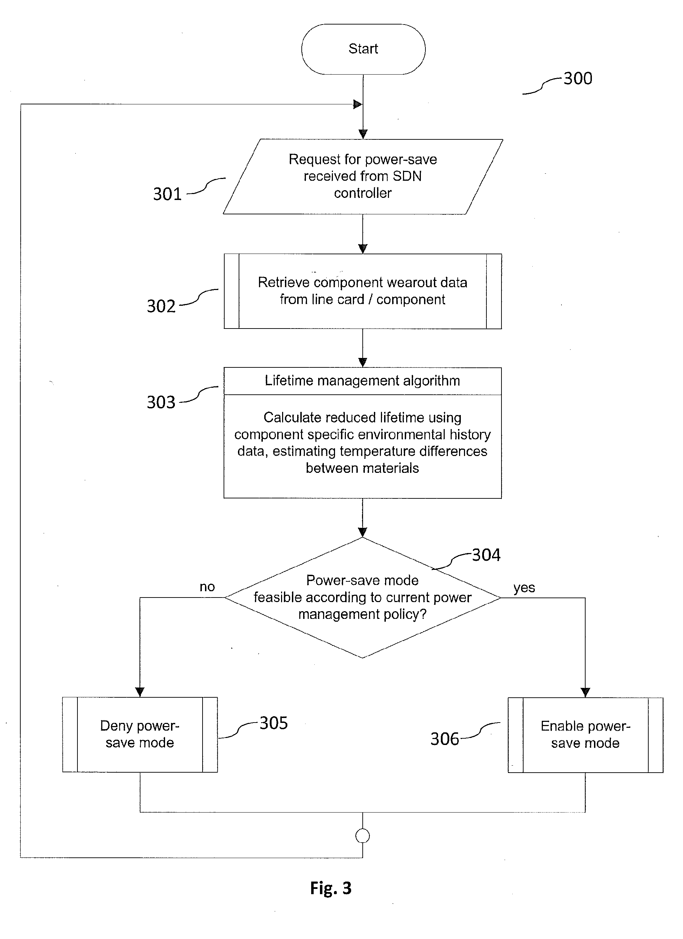

The interface card 210 (notably the processing unit 210 of the interface card 210) may be configured to receive a request for entering a power-save mode. Furthermore, the interface card 210 may be configured to determine whether the request for entering the power-save mode is accepted or denied. For this purpose, the interface card 210 may be configured to execute the method 300 which is illustrated in Fig. 3. The method 300 constitutes an example for an individual power management policy or strategy that determines whether the requested power-save mode (with an associated estimated additional stress) shall be set or not. Several different strategies may be configurable, e.g. a strategy which is directed at setting the power-save mode unconditionally, a strategy which is directed at setting the power-save mode only at relatively high ambient temperatures (in order to avoid additional stress), a strategy which is directed at setting the power-save mode dependent on traffic priority and/or a strategy which is directed at setting the power-save mode dependent on external factors such as the current energy price and/or the number of replacement interface cards 210 which are on stock and/or an effort for replacing an interface card 210.

The method 300 for controlling the operation of an interface card 210 may comprise the step 301 of receiving a request for entering a power-save mode, e.g. from the control plan 103 (which may comprise an SDN controller). Furthermore, the method 300 may comprise the step 302 of retrieving the environmental data which is stored within the storage unit 214 of the interface card 210. In addition, the method 300 may comprise the step 303 of determining an indication or an estimate of the lifetime reduction which is associated with the current power-save mode request. This estimate of the lifetime reduction may be determined based on the historical environmental data (retrieved from the storage unit 210) and/or based on current environmental data (such as a current ambient temperature). For determining the estimate of the lifetime reduction, a pre-determined lifetime management algorithm may be used. This lifetime management algorithm may have been determined based on actual lifetime measurements of a plurality of interface cards 210 (e.g. during a training phase).

Furthermore, the method 300 may comprise the step 304 of determining whether or not to enter the requested power-save mode. This may be determined based on the estimate of the lifetime reduction. Furthermore, a pre-determined power management policy may be taken into account. By way of example, the estimate of the lifetime reduction may be compared with a benefit which is expected when activating the power-save mode. The comparison result may be used to determine whether or not to enter the requested power-save mode. Based on the outcome of step 304, the power-save mode request by be denied (step 305) or the power-save mode may be enabled (step 306).

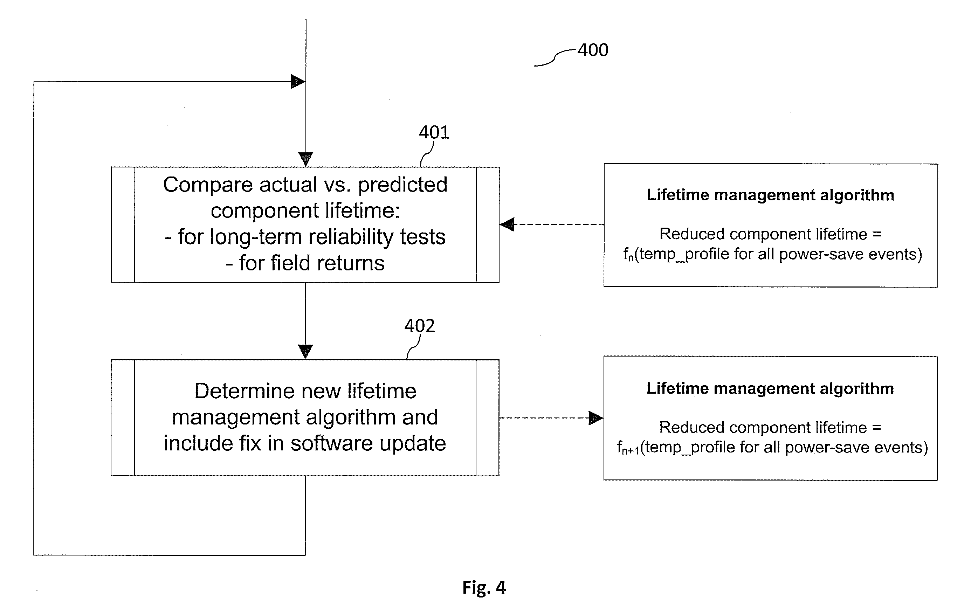

The power management policy and/or the lifetime management algorithm which are used for a particular interface card 210 may be updated and/or modified (e.g. using software patches). In particular, new findings regarding the evolution of the lifetime of an interface card 210 may be taken into account. Such updates of the power management policy and/or the lifetime management algorithm may be used to shorten development times because equipment can be installed and operated while results regarding longer-lasting temperature tests can be applied via SW updates at a later stage. Fig. 4 illustrates an example method 400 for updating a lifetime management algorithm. In a first step 401, data regarding the lifetime of one or more interface cards 210 may be gathered, e.g. during long-term reliability tests or based on field returns. The gathered data may then be used to determine an updated lifetime management algorithm. The updated lifetime management algorithm may then be provided as a SW update to the different interface cards 210 (step 402). In Fig. 4 the variable temp_profile may comprise one or more of the above mentioned measured and stored environmental parameters.

Hence, a method 300 for controlling a network component 101, 210, 212 of a communication network 100 is described. The network component 101, 210, 212 may comprise a network node 101 (with one or more interface cards 210). Alternatively or in addition, the network component 101, 210, 212 may comprise an individual interface card 210 (with one or more network modules 212, e.g. with one or more transmitter/receiver modules). Alternatively or in addition, the network component 101, 210, 212 may comprise an individual network module 212. The communication network may comprise or may be a transmission network, notably an optical transmission network. Hence, the network component may comprise or may be an optical transmitter / receiver, e.g. an optical transponder.

The method 300 may comprise determining 302 historical data which is indicative of environmental conditions and/or operation conditions that the network component 101, 210, 212 has been exposed to in the past. The historical data may be indicative of one or more of: an ambient temperature in a direct vicinity of the network component 101, 210, 212; a temperature of the network component 101, 210, 212 itself; a number of times that the network component 101, 210, 212 has been put into a power-save mode; a number and/or a duration of events at which a temperature of the network component 101, 210, 212 has exceeded a pre-determined temperature threshold; a number and/or a duration of events at which a voltage at the network component 101, 210, 212 has exceeded a pre-determined voltage threshold; and/or an evolution of the temperature of the network component 101, 210, 212 during one or more preceding power-save modes.

The historical data may be determined by the network component 101, 210, 212 during operation of the network component 101, 210, 212. The historical data may then be stored on a storage unit 214 within the network component 101,210, 212 and/or on a central storage entity 104 within the network 100.

The method 300 further comprises determining 304 whether to put the network component 101, 210, 212 into a power-save mode based on the historical data. In particular, the method 300 may comprise determining 303, based on the historical data, an estimate of a lifetime reduction of the network component 101, 210, 212, which is caused by entering the power-save mode. The estimate of the lifetime reduction may also be determined based on a lifetime management algorithm, wherein the lifetime management algorithm is dependent on training data indicative of lifetime measurements of a plurality of network components 101, 210, 212 of the same type. It may then be determined whether to put the network component 101, 210, 212 into the power-save mode based on the estimate of the lifetime reduction. The lifetime management algorithm may be configurable in accordance to different power management strategies or policies (as outlined above).

The network component 101, 210, 212 may exhibit an active mode and a power-save mode. By way of example, a network module or network interface module 212 may exhibit an active mode and a power-save mode. A line interface card 210 which comprises a plurality of network modules 212 may exhibit an active mode and a power-save mode for each individual network module 212. As such, each network module 212 of the interface card 210 may be put individually into an active mode or into a power-save mode.

As such, the network component 101, 210, 212 may be operated in an active mode (thereby providing network capacity within the network) and in a power-save mode (where no network capacity is provided within the network). An energy consumption of the network component 101, 210, 212 within the power-save mode is typically lower than the energy consumption of the network component 101, 210, 212 within the active mode. As such, entering the power-save mode typically leads to a reduction of the energy consumption of the communication network. On the other hand, a temperature of the network component 101, 210, 212 within the power-save mode may be different from (typically lower than) a temperature of the network component 101, 210, 212 within the active mode. Hence, entering the power-save mode may be associated with physical stress for the network component, i.e. entering the power-save mode may lead to a lifetime reduction of the network component.

By taking into account historical data when evaluating whether or not to put a network component into the power-save mode, an energy-efficient communication network may be provided, while at the same time ensuring a high reliability / lifetime of the network components of the communication network.

The method 300 may further comprise (see Fig. 4), determining an updated lifetime management algorithm based on updated training data. The updated lifetime management algorithm may be provided to the network components of the communication networks. Furthermore, the updated lifetime management algorithm may be used for controlling the network component 101, 210, 212. By updating the lifetime management algorithm, new findings regarding the evolution of the lifetime of a particular type of network components may be taken into account, thereby improving energy efficiency and/or reliability of the communication network.

The method may further comprise determining a power management policy which is indicative of one or more conditions which need to be met for putting the network component 101, 210, 212 into the power-save mode. The one or more conditions may be dependent on one or more of: an expected energy saving which is associated with the power-save mode and/or a number of replacement components which are available for replacing the network component 101,210, 212 (e.g. for replacing a defective network component 101, 210, 212) and/or an expected cost for replacing the network component 101, 210, 212. By way of example, a condition for entering the power-save mode may be that an energy saving caused by the power-save mode outweighs a lifetime reduction caused by the power-saving mode. It may be determined whether the one or more conditions are met based on the historical data. If the one or more conditions are met, the network component 101, 210, 212 may be put into the power-save mode.

The method 300 may further comprise determining current data which is indicative of environmental conditions and/or operation conditions that the network component 101,210, 212 is exposed to when determining whether to put the network component 101, 210, 212 into the power-save mode. The current data may e.g. be indicative of a current ambient temperature and/or a current traffic priority. It may be determined whether to put the network component 101,210, 212 into the power-save mode also based on the current data.

The method may further comprise, receiving a request of entering the power-save mode at the network component 101, 210, 212. It may then be determined by the network component 101, 210, 212 itself whether to enter the power-save mode or whether to deny the request for entering the power-save mode. As such, a decision regarding a particular power-save mode request may be made locally and efficiently at an individual network component 101, 210, 212.

Furthermore, an interface card 210 for a network node 101 of a communication network 100 is described. In addition a network module 212 for such an interface card 210 is described. The interface card 210 and/or the network module 212 for the interface card 210 comprise a storage unit 214 that is configured to store historical data which is indicative of environmental conditions and/or operation conditions that the interface card 210 and/or the network module 212 have been exposed to in the past. Furthermore, the interface card 210 and/or the network module 212 comprise a processing unit 210 which is configured to determine whether to put the interface card 210 and/or the network module 212 into a power-save mode based on the historical data. As such, the interface card 210 and/or the network module 212 may efficiently determine an optimal trade-off between energy consumption and lifetime.

The interface card 210 and/or the network module 212 may be configured to receive a request for entering the power-save mode from a control plane 103 (e.g. from a central server) of the communication network 100. Furthermore, the interface card 210 and/or the network module 212 may be configured to inform the control plane 103 on whether the power-save mode has been entered or not. As a result of this, the control plane 103 may perform its network and traffic management tasks in an efficient manner.

The interface card 210 and/or the network module 212 may be configured to determine current data which is indicative of environmental conditions and/or operation conditions that the interface card 210 and/or the network module 212 is exposed to at a particular time instant. Furthermore, the interface card 210 and/or the network module 212 may be configured to store the current data for use as historical data within the storage unit 214.

In addition, a communication network 100 is described. The communication network 100 comprises a plurality of network components 101, 210, 212 which are coupled by a transmission medium 102. In addition, the communication network 100 comprises a control plane 103 which is configured to control the plurality of network components 101, 210, 212 using a method described in the present document.

The methods described in the present document address the technical problem of a growing energy consumption of communication networks, in particular of core networks. By using the described methods, a transmission network may adopt a load-adaptive operation, thereby reducing the energy which is consumed by the network. At the same time, the reliability of the transmission network may be maintained. In particular, the described methods allow monitoring an (expected) lifetime of a network component of online, based on stored data which is indicative of operating history and environmental parameters.

Due to special requirements in the telecommunications sector (high operating temperature range, 25-years life time), it is and will remain a challenge to specify the number of on/off cycles that technically complex interface cards can support. As the actual number of on/off cycles that can be supported is highly dependent on operating history and environmental parameters, an online monitoring and prognosis solution is proposed. This proposed solution provides means to an operator for increasing availability of a network.

It should be noted that the description and drawings merely illustrate the principles of the proposed methods and systems. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Furthermore, it should be noted that steps of various above-described methods and components of described systems can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

In addition, it should be noted that the functions of the various elements described in the present patent document may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor (NP), application specific integrated circuit (ASIC), field programmable gate array (FPGA), read only memory (ROM) for storing software, random access memory (RAM), and non volatile storage. Other hardware, conventional and/or custom, may also be included.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A method (300) for controlling a network component (101, 210, 212) of a communication network (100), the method (300) comprising
- determining (302) historical data which is indicative of environmental conditions and/or operation conditions that the network component (101, 210, 212) has been exposed to in the past; and
- determining (304) whether to put the network component (101, 210, 212) into a power-save mode based on the historical data.

2. The method (300) of claim 1, wherein
- the method further comprises, determining (303), based on the historical data, an estimate of a lifetime reduction of the network component (101, 210, 212), which is caused by entering the power-save mode; and
- determining (304) whether to put the network component (101, 210, 212) into the power-save mode based on the estimate of the lifetime reduction.

3. The method (300) of claim 2, wherein
- the estimate of the lifetime reduction is also determined based on a lifetime management algorithm; and
- the lifetime management algorithm is dependent on training data indicative of lifetime measurements of a plurality of network components (101, 210, 212).

4. The method (300) of claim 3, further comprising
- determining an updated lifetime management algorithm based on updated training data; and
- using the updated lifetime management algorithm for controlling the network component (101, 210, 212).

5. The method (300) of any of claims 2 to 4, wherein the method further comprises
- determining a power management policy which is indicative of one or more conditions which need to be met for putting the network component (101, 210, 212) into the power-save mode; and
- determining whether the one or more conditions are met based on the historical data.

6. The method (300) of claim 5, wherein the one or more conditions are dependent on one or more of:
- an expected energy saving which is associated with the power-save mode; and/or
- a number of replacement components which are available for replacing the network component (101, 210, 212) and/or
- an expected cost for replacing the network component (101, 210, 212).

7. The method (300) of any previous claim, further comprising
- determining current data which is indicative of environmental conditions and/or operation conditions that the network component (101, 210, 212) is exposed to when determining whether to put the network component (101, 210, 212) into the power-save mode; and
- determining (304) whether to put the network component (101, 210, 212) into the power-save mode also based on the current data.

8. The method (300) of any previous claim, wherein
- the method further comprises, receiving a request of entering the power-save mode at the network component (101, 210, 212); and
- it is determined by the network component (101, 210, 212) whether to enter the power-save mode or whether to deny the request for entering the power-save mode.

9. The method (300) of any previous claim, wherein the historical data is indicative of one or more of:
- an ambient temperature in a direct vicinity of the network component (101, 210, 212);
- a temperature of the network component (101, 210, 212);
- a number of times that the network component (101, 210, 212) has been put into a power-save mode;
- a number and/or a duration of events at which a temperature of the network component (101, 210, 212) has exceeded a pre-determined temperature threshold;
- a number and/or a duration of events at which a voltage at the network component (101, 210, 212) has exceeded a pre-determined voltage threshold; and/or
- an evolution of the temperature of the network component (101, 210, 212) during one or more preceding power-save modes.

10. The method (300) of any previous claim, wherein
- the network component (101, 210, 212) comprises an interface card (210) of a network node (101); and/or
- the network component (101, 210, 212) comprises a network module (212) of the interface card (210) of the network node (101); and/or
- the interface card (210) and/or the network module (212) comprise a storage unit (214) which is configured to store the historical data; and/or
- the communication network (100) comprises a storage entity (104) which is configured to store the historical data.

11. The method (300) of any previous claim, wherein
- the network component (101, 210, 212) exhibits an active mode and a power-save mode;
- an energy consumption of the network component (101, 210, 212) within the power-save mode is lower than the energy consumption of the network component (101, 210, 212) within the active mode; and
- a temperature of the network component (101, 210, 212) within the power-save mode is different from a temperature of the network component (101, 210, 212) within the active mode.

12. An interface card (210) for a network node (101) of a communication network (100), wherein the interface card (210) comprises
- a storage unit (214) configured to store historical data which is indicative of environmental conditions and/or operation conditions that the interface card (210) and/or a network module (212) of the interface card (210) has been exposed to in the past; and
- a processing unit (210) configured to determine whether to put the interface card (210) and/or the network module (212) of the interface card (210) into a power-save mode based on the historical data.

13. The interface card (210) of claim 12, wherein the interface card (210) is configured to
- receive a request for entering the power-save mode from a control plane (103) of the communication network (100); and
- inform the control plane (103) on whether the power-save mode has been entered or not.

14. The interface card (210) of any of claims 11 to 13, wherein the interface card (210) is configured to
- determine current data which is indicative of environmental conditions and/or operation conditions that the interface card (210) and/or the network module (212) is exposed to; and
- store the current data for use as historical data within the storage unit (214).

15. A communication network (100), wherein the communication network (100) comprises
- a plurality of network components (101, 210, 212) which are coupled by a transmission medium (102); and
- a control plane (103) which is configured to control the plurality of network components (101, 210, 212) using the method (300) of any of claims 1 to 11.

## Amended claims

### Amended claims in accordance with Rule 137(2) EPC.

1. A method (300) for controlling a network component (101, 210, 212) of a communication network (100), the method (300) comprising
- determining (302) historical data which is indicative of environmental conditions and/or operation conditions that the network component (101, 210, 212) has been exposed to in the past;
- storing the historical data in a storage unit (104, 214) within the network component (101, 210, 212); and
- determining (304) by the network component (101, 210, 212) itself whether to put the network component (101, 210, 212) into a power-save mode based on the stored historical data.

2. The method (300) of claim 1, wherein
- the method further comprises, determining (303), based on the historical data, an estimate of a lifetime reduction of the network component (101, 210, 212), which is caused by entering the power-save mode; and
- determining (304) whether to put the network component (101, 210, 212) into the power-save mode based on the estimate of the lifetime reduction.

3. The method (300) of claim 2, wherein
- the estimate of the lifetime reduction is also determined based on a lifetime management algorithm; and
- the lifetime management algorithm is dependent on training data indicative of lifetime measurements of a plurality of network components (101, 210, 212).

4. The method (300) of claim 3, further comprising
- determining an updated lifetime management algorithm based on updated training data; and
- using the updated lifetime management algorithm for controlling the network component (101, 210, 212).

5. The method (300) of any of claims 2 to 4, wherein the method further comprises
- determining a power management policy which is indicative of one or more conditions which need to be met for putting the network component (101, 210, 212) into the power-save mode; and
- determining whether the one or more conditions are met based on the historical data.

6. The method (300) of claim 5, wherein the one or more conditions are dependent on one or more of:
- an expected energy saving which is associated with the power-save mode; and/or
- a number of replacement components which are available for replacing the network component (101, 210, 212) and/or
- an expected cost for replacing the network component (101, 210, 212).

7. The method (300) of any previous claim, further comprising
- determining current data which is indicative of environmental conditions and/or operation conditions that the network component (101, 210, 212) is exposed to when determining whether to put the network component (101, 210, 212) into the power-save mode; and
- determining (304) whether to put the network component (101, 210, 212) into the power-save mode also based on the current data.

8. The method (300) of any previous claim, wherein
- the method further comprises, receiving a request of entering the power-save mode at the network component (101, 210, 212); and
- it is determined by the network component (101, 210, 212) whether to enter the power-save mode or whether to deny the request for entering the power-save mode.

9. The method (300) of any previous claim, wherein the historical data is indicative of one or more of:
- an ambient temperature in a direct vicinity of the network component (101,210,212);
- a temperature of the network component (101, 210, 212);
- a number of times that the network component (101, 210, 212) has been put into a power-save mode;
- a number and/or a duration of events at which a temperature of the network component (101, 210, 212) has exceeded a pre-determined temperature threshold;
- a number and/or a duration of events at which a voltage at the network component (101, 210, 212) has exceeded a pre-determined voltage threshold; and/or
- an evolution of the temperature of the network component (101, 210, 212) during one or more preceding power-save modes.

10. The method (300) of any previous claim, wherein
- the network component (101, 210, 212) comprises an interface card (210) of a network node (101); and/or
- the network component (101, 210, 212) comprises a network module (212) of the interface card (210) of the network node (101); and/or
- the interface card (210) and/or the network module (212) comprise a storage unit (214) which is configured to store the historical data; and/or
- the communication network (100) comprises a storage entity (104) which is configured to store the historical data.

11. The method (300) of any previous claim, wherein
- the network component (101, 210, 212) exhibits an active mode and a power-save mode;
- an energy consumption of the network component (101, 210, 212) within the power-save mode is lower than the energy consumption of the network component (101, 210, 212) within the active mode; and
- a temperature of the network component (101, 210, 212) within the power-save mode is different from a temperature of the network component (101, 210, 212) within the active mode.

12. An interface card (210) for a network node (101) of a communication network (100), wherein the interface card (210) comprises
- a storage unit (214) configured to store historical data which is indicative of environmental conditions and/or operation conditions that the interface card (210) and/or a network module (212) of the interface card (210) has been exposed to in the past; and
- a processing unit (210) configured to determine whether to put the interface card (210) and/or the network module (212) of the interface card (210) into a power-save mode based on the historical data.

13. The interface card (210) of claim 12, wherein the interface card (210) is configured to
- receive a request for entering the power-save mode from a control plane (103) of the communication network (100); and
- inform the control plane (103) on whether the power-save mode has been entered or not.

14. The interface card (210) of claim 12 or 13, wherein the interface card (210) is configured to
- determine current data which is indicative of environmental conditions and/or operation conditions that the interface card (210) and/or the network module (212) is exposed to; and
- store the current data for use as historical data within the storage unit (214).

15. A communication network (100), wherein the communication network (100) comprises
- a plurality of network components (101, 210, 212) which are coupled by a transmission medium (102); and
- a control plane (103) which is configured to control the plurality of network components (101, 210, 212) using the method (300), of any of claims 1 to 11.
